Europäisches Patentamt

European Patent Office

Office européen des brevets

(19)

(11) Numéro de publication: **0 018 615**
**B1**

(12) **FASCICULE DE BREVET EUROPEEN**

(45) Date de publication du fascicule du brevet: **27.07.83**

(51) Int. Cl.³: **H 04 Q 11/04**

(21) Numéro de dépôt: **80102278.1**

(22) Date de dépôt: **28.04.80**

(54) **Dispositif de raccordement de multiplex dans un central de commutation temporelle.**

(30) Priorité: **04.05.79 FR 7911320**

(43) Date de publication de la demande:
**12.11.80 Bulletin 80/23**

(45) Mention de la délivrance du brevet:
**27.07.83 Bulletin 83/30**

(84) Etats contractants désignés:
**BE CH DE FR GB IT LI NL SE**

(56) Documents cités:
**FR - A - 2 341 999**
**FR - A - 2 347 841**
**FR - A - 2 365 922**
**FR - A - 2 386 225**
**US - A - 3 970 799**
**US - A - 4 071 703**

**ELECTRICAL COMMUNICATION, vol. 52, no. 1,
1977 Londres GB SCHREINER: "Field trial
experience with PCM exchanges", pages 37—
48**

(73) Titulaire: **COMPAGNIE INDUSTRIELLE DES
TELECOMMUNICATIONS CIT-ALCATEL S.A. dite:
12, rue de la Baume
F-75008 Paris (FR)**

(72) Inventeur: **Herledan, Jean-René
Kerham Tredrez Locquemeau
F-22300 Lannion (FR)**
Inventeur: **Le Dieu, Bernard
Rue de Keralsam
F-22700 Perros Guirec (FR)**
Inventeur: **Martin, Jean-Pierre
Le Guern
F-22670 Pleumeur Bodou (FR)**
Inventeur: **Quemere, Daniel
31, rue de L'Yser
F-22700 Perros Guirec (FR)**

(74) Mandataire: **Weinmiller, Jürgen et al,
Zeppelinstrasse 63
D-8000 München 80 (DE)**

**0018615**

(56) Documents cités:
COMMUTATION ET ELECTRONIQUE, no. 49,
avril 1975 Paris FR VOYER et al.: "Réseau de
connexion pour grands centres temporels" page
23—34
COMMUTATION ET ELECTRONIQUE, no. 48,
janvier 1975 Paris FR FEUERSTEIN: "Système
E10. Le groupe de synchronisation de circuits
(GSC)", pages 7—19
COMMUTATION ET ELECTRONIQUE, no. 34,
juillet 1971 Paris FR FEUERSTEIN et al.:
"Groupes d'équipments de synchronisation du
système de commutation temporelle Platon",
pages 7—24

Dispositif de raccordement de multiplex dans un central de commutation temporelle

L'invention concerne le raccordement de multiplex reliant un central de commutation temporelle, ledit central comportant une horloge locale, des multienregistreurs, des taxeurs, des marqueurs, un organe de contrôle relié à un centre de traitement des informations, un réseau de connexion, et étant raccordé à d'autres centraux du type électromécanique ou temporel, à des satellites, par des multiplex entrants et des multiplex sortants. Un central de commutation temporelle est un central qui transmet des signaux de parole et de signalisation modulés par impulsions codées. Les signaux sont contenus dans des voies d'une trame et acheminés par des multiplex. Chaque multiplex provient d'un central ou d'un satellite ayant sa propre horloge dite horloge distante; le central de commutation temporelle à sa propre horloge dite horloge locale. Il est bien connu que les horloges distantes et l'horloge locale ne sont pas en phase et qu'elles sont plésiochrones, et que les signalisations des différents centraux ne sont pas identiques; en particulier les signalisations utilisées dans un central électromécanique sont différentes de celles utilisées dans un central à commutation temporelle. Il est donc nécessaire de synchroniser les multiplex entrants avec l'horloge locale et de tenir compte des différentes signalisations afin de les exploiter lors des diverses opérations effectuées par le central de commutation temporelle qui reçoit les informations de ces multiplex entrants. On connaît déjà des dispositifs de raccordement de multiplex dans un central de commutation temporelle du type mentionné ci-dessus, notamment par l'article "Groupement d'équipements de synchronisation du système de commutation temporelle Platon" de MM: D. FEUERSTEIN, J. B. JACOB, R. RENOULIN et J. GUEZOU, paru dans la revue COMMUTATION ET ELECTRONIQUE No. 34—juillet 1971, pages 7 à 24.

Dans ces dispositifs de raccordement les dispositifs de réception et d'émission de la signalisation sont différents selon que les multiplex relient le central de commutation temporelle à des centraux de commutation temporelle, à des centraux électromécaniques ou à des satellites, la signalisation étant différente dans chaque cas.

L'invention a pour but un dispositif de raccordement de multiplex dans un central de commutation temporelle plus simple que les dispositifs connus.

L'invention a pour objet un dispositif de raccordement de multiplex dans un central de commutation temporelle, ledit central comportant une horloge locale, des multienregistreurs, des taxeurs, des marqueurs, un organe de contrôle relié à un centre de traitement des informations, un réseau de connexion, et étant raccordé à d'autres centraux du type électromécanique ou temporel, à des satellites, par des multiplex entrants et des multiplex sortants, caractérisé par le fait qu'il comprend des modules de raccordement, identiques, reliés chacun à des multiplex entrants et sortants, à l'horloge locale, au réseau de connexion, et aux multienregistreurs, un interface de commande relié aux marqueurs, et à l'organe de contrôle, chaque module de raccordement comprenant:

— des transcodeurs reliés chacun à un multiplex entrant et à un multiplex sortant pour effectuer un transcodage d'un premier code dans un second code et vice-versa,
— des dispositifs de synchronisation, un par transcodeur, reliés chacun à un transcodeur, pour détecter un mot de verrouillage trame et synchroniser avec l'horloge locale les voies temporelles du multiplex entrant, et injecter les mots de verrouillage trame sur les multiplex sortants,
— un répartiteur de trafic, pour acheminer des voies temporelles des multiplex entrants vers le réseau de connexion et un récepteur de signalisation, pour acheminer des voies temporelles reçues du réseau de connexion vers des multiplex sortants et y incorporer la signalisation reçue d'un émetteur de signalisation, ce répartiteur étant relié en entrée à chaque dispositif de synchronisation par un multiplex, en sortie à chaque dispositif de synchronisation par un multiplex, en entrée au réseau de connexion par autant de multiplex qu'il y a de dispositifs de synchronisation, en sortie au réseau de connexion par autant de multiplex qu'il y a de dispositifs de synchronisation et à l'interface de commande,
— un récepteur de signalisation, pour détecter un mot de verrouillage multitrame et recevoir la signalisation de chacun des multiplex entrants et l'émettre vers les multienregistreurs, relié au répartiteur de trafic, à l'interface de commande, aux multienregistreurs,
— un émetteur de signalisation, pour recevoir du réseau de connexion la signalisation relative à chacun des multiplex sortants et l'émettre vers le répartiteur de trafic, relié au réseau de connexion, à l'interface de commande, et au répartiteur de trafic.

L'invention va être décrite à l'aide d'exemples de réalisation illustrés par les figures annexées dans lesquelles:

— la figure 1 représente schématiquement un dispositif de raccordement conforme à l'invention,
— la figure 2 représente un circuit d'émission de multiplex du dispositif de synchronisation de la figure 1,

— la figure 3 représente un répartiteur de trafic du dispositif de la figure 1,

— la figure 4 représente un récepteur de signalisation du dispositif de la figure 1,

— la figure 5 représente un circuit de détection de verrouillage de multitrame du récepteur de la figure 4,

— la figure 6 représente un circuit de changement d'état du récepteur de la figure 4,

— la figure 7 représente un circuit de signalisation du récepteur de la figure 4,

— la figure 8 représente un émetteur de signalisation du dispositif de la figure 1,

— la figure 9 représente un circuit d'adressage de l'émetteur de la figure 8,

— la figure 10 représente un circuit de changement d'état de l'émetteur de la figure 8,

— la figure 11 représente deux sous-ensembles identiques constitués par certains organes d'un module de raccordement.

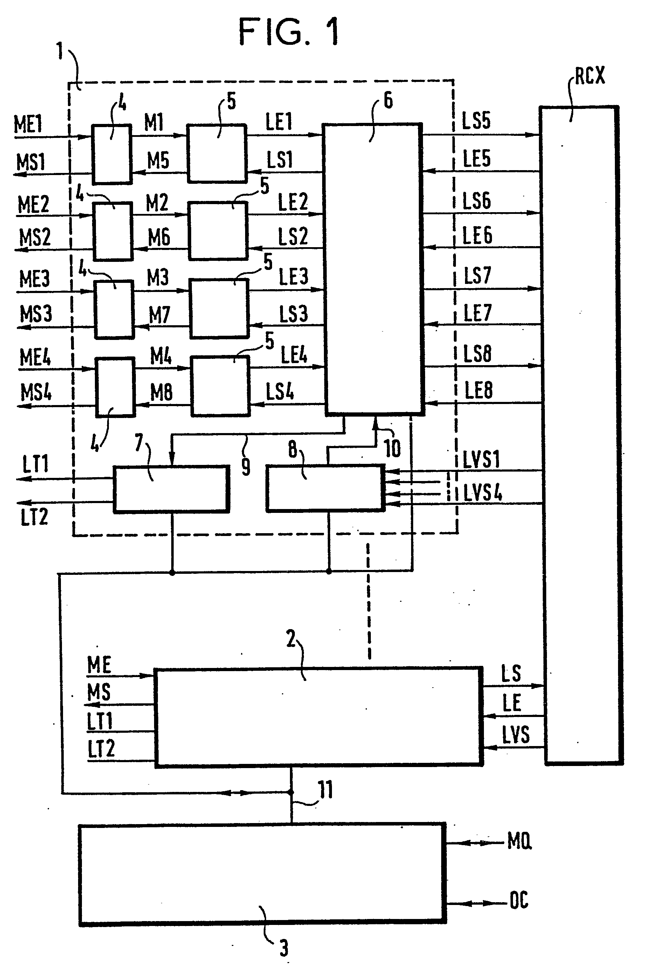

La figure 1 représente un dispositif de raccordement conforme à l'invention constitué de plusieurs modules de raccordements, identiques tels que 1 et 2 et d'un interface de commande 3; les différents modules de raccordement sont reliés à un réseau de connexion RCX; bien entendu le réseau de connexion est également relié à d'autres dispositifs de raccordement identiques à celui de la figure 1.

Un module de raccordement, tel que 1 comporte quatre transcodeurs 4, quatre dispositifs de synchronisation 5, un répartiteur de trafic 6, un récepteur de signalisation 7 et un émetteur de signalisation 8. Chaque transcodeur est relié à un multiplex entrant, ME1, ME2, ME3, ME4, et à un multiplex sortant MS1, MS2, MS3, MS4; chaque transcodeur est relié à un dispositif de synchronisation par deux multiplex M1 M5, M2 M6, M3 M7, M4 M8, chaque multiplex étant affecté à un sens de transmission.

Le répartiteur de trafic 6 est relié à chaque dispositif de synchronisation par un multiplex entrant LE1, LE2, LE3, LE4, et par un multiplex sortant LS1, LS2, LS3, LS4. Le répartiteur de trafic est relié au réseau de connexion par quatre multiplex entrants LE5, LE6, LE7, LE8, et par quatre multiplex sortants LS5, LS6, LS7, LS8.

Le récepteur de signalisation 7 est relié au répartiteur de trafic par une liaison 9 et aux multienregistreurs du central par des liaisons LT1 et LT2. L'émetteur de signalisation 8 est relié au répartiteur de trafic par une liaison 10 et au réseau de connexion RCX par des liaisons LVS1, LVS2, LVS3, LVS4.

L'interface de commande 3 est relié par une liaison MQ aux marqueurs (non représentés) du central, et par une liaison OC à l'organe de contrôle (également non représenté) du central de commutation temporelle lui même relié à un centre de traitement des informations; l'interface de commande est également relié aux modules de raccordement par un bus 11; dans chaque module le bus 11 est relié au récepteur de signalisation, à l'émetteur de signalisation et au répartiteur de trafic.

Cet interface est par exemple du type de l'ensemble logique standard (ELS) décrit dans l'article "Concentrateur spatio-temporel 500 abonnés pour système de commutation temporelle platon E10" de MM. JACOB, RENOULIN et VOYER, paru dans la revue COMMUTATION et ELECTRONIQUE no. 34 juillet 1971, pages 25 à 47.

Les transcodeurs 4 sont également de type connu; un transcodeur assure, en réception, la récupération des informations du multiplex entrant auquel il est relié (ME1), la récupération de l'horloge distante et la transformation du code HDB3 en code binaire, et en émission, la transformation du code binaire en code HDB3.

Un dispositif de synchronisation 5 comporte, un circuit de réception de multiplex qui assure la synchronisation d'un multiplex venant du transcodeur avec l'horloge locale, et un circuit d'émission de multiplex vers le transcodeur. Le circuit de réception de multiplex comprend un circuit de contrôle du mot de verrouillage de trame et un circuit de synchronisation des voies temporelles qui sont par exemple du type décrit dans l'article déjà cité de la revue Commutation et Electronique No. 34 juillet 1971, mais en ne supprimant pas les voies temporelles de signalisation dans le circuit de synchronisation des voies de parole décrit.

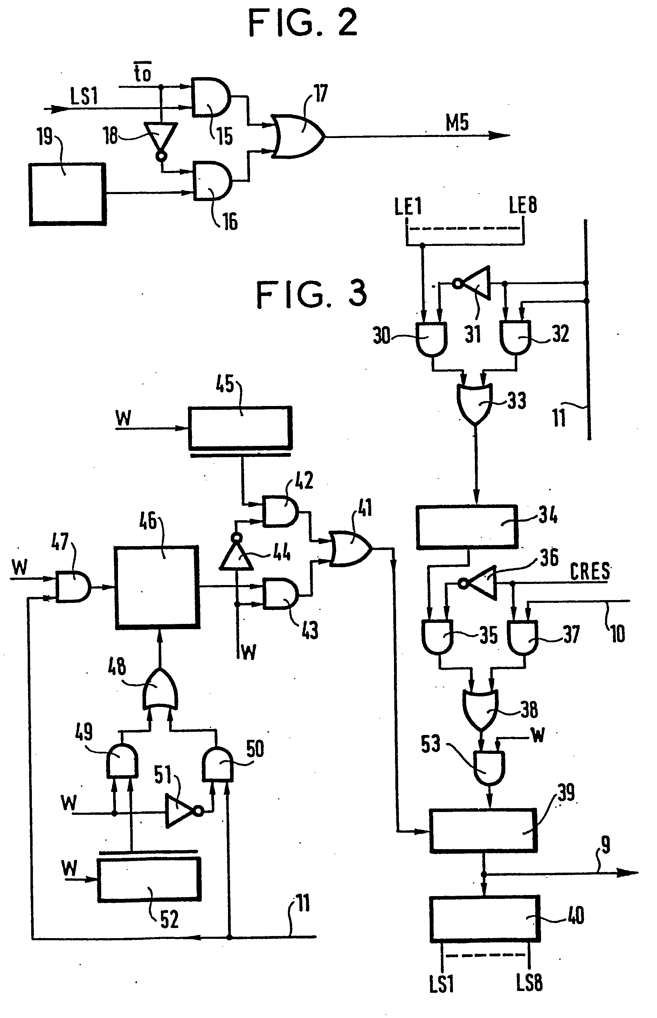

Le circuit d'émission de multiplex vers le transcodeur est représenté figure 2. Une porte ET 15 a une entrée reliée au multiplex sortant LS1 par exemple provenant du répartiteur de trafic et une autre entrée reçoit de l'horloge locale un signal to, to étant un signal correspondant à la voie temporelle 0, qui contient les mots de verrouillage de trame, sa durée étant de 3,9 microsecondes et sa période de 125 microsecondes; une porte ET16 reçoit sur une entrée, à travers un inverseur 18, le signal to, et une autre entrée est reliée à un registre parallèle-série 19 dans lequel sont chargés les 8eb (éléments binaires) des motifs de la voie temporelle 0. Les sorties des portes ET 15 et 16 sont reliées à une porte OU 17 dont la sortie est reliée au multiplex M5 puisque l'on a supposé que l'entrée était reliée au multiplex sortant LS1.

La figure 3 représente un répartiteur de trafic 6. Les multiplex entrants LE1 à LE8 sont reliés à une entrée d'une porte ET 30 dont une autre entrée est reliée, à travers un inverseur 31, au bus 11 et à une entrée d'une porte ET 32 dont une autre entrée est reliée au bus 11. Les sorties des portes ET 30 et 32 sont reliées à une porte OU 33 dont la sortie est reliée à un convertisseur série-parallèle 34. L'interface de commande peut donc délivrer par le bus 11 d'une part un signal inhibant la porte ET 30 et activant la porte ET 32, et d'autre part des informations à des fins de test. La sortie du convertisseur série-parallèle 34 est reliée à une entrée d'une porte ET 35 dont une autre entrée est reliée à un inverseur 36 qui reçoit un signal CRES délivré par l'émetteur de signalisation; une porte ET 37 reçoit sur une entrée le signal CRES, une autre entrée étant reliée à la liaison 10. Les sorties des portes ET 35 et 37 sont reliées à une porte OU 38 dont la sortie est reliée à une porte ET 53 dont l'autre entrée reçoit le signal d'horloge w; la sortie de la porte ET 53 est reliée à l'entrée d'une mémoire tampon 39. La sortie de la mémoire tampon 39 est reliée à la liaison 9 et à l'entrée d'un convertisseur parallèle-série 40 relié en sortie aux multiplex sortants LS1 à LS8.

L'adressage de la mémoire tampon 39 est effectué par un circuit comportant une porte OU 41 dont la sortie est reliée à la mémoire tampon, deux portes ET 42 et 43, un inverseur 44; les sorties des portes ET sont reliées à la porte OU; le signal w est appliqué à une entrée de la porte ET 43 et à l'inverseur qui est relié à une entrée de la porte ET 42. Une autre entrée de la porte ET 42 est reliée à la sortie d'un compteur 45 commandé par le signal w; une autre entrée de la porte ET 43 est reliée à la sortie d'une mémoire de commande 46.

L'entrée de la mémoire de commande 46 est reliée à la sortie d'une porte ET 47 qui reçoit sur une entrée le signal w, l'autre entrée étant reliée au bus 11. La mémoire de commande est adressée par un circuit comprenant une porte OU 48 et deux portes ET 49 et 50; la sortie de la porte OU est reliée à l'entrée d'adressage de la mémoire de commande; la sortie de chacune des portes ET est reliée à une entrée de la porte OU. La porte ET 49 a une entrée reliée à la sortie d'un compteur 52 commandé par le signal w; une autre entrée de la porte ET 49 reçoit le signal w. Une entrée de la porte ET 50 est reliée au bus 11 et une autre entrée est reliée à un inverseur 51 qui reçoit le signal w. La mémoire tampon est une mémoire de 256 mots de 8 eb, un mot étant affecté à une voie temporelle. Les informations des voies temporelles des multiplex entrants LE1 à LE8, sont inscrites cycliquement à l'aide du compteur 45 à 8 eb; les informations transmises par la liaison 10 sont des informations de signalisation à émettre uniquement sur les multiplex sortants LS1 à LS4; ces informations sont écrites dans la mémoire tampon pendant le créneau CRES et pourraient être émises sur n'importe quelle voie temporelle des multiplex sortants LS1 à LS4, le choix se faisant sous les directives de la mémoire de commande.

La lecture de la mémoire tampon est effectuée à partir des adresses délivrées par la mémoire de commande 46 qui est une mémoire de 256 mots de 8eb, un mot définissant une adresse de la mémoire tampon.

L'écriture dans la mémoire de commande est effectuée sous commande de l'interface de commande par l'intermédiaire du bus 11 qui délivre les adresses d'écriture dans la mémoire de commande, c'est-à-dire un mot de la mémoire de commande dont le numéro correspond à une voie temporelle donnée d'un multiplex sortant LS1 à LS8 donné, la liaison multiplex de signalisation 9 véhiculant les mêmes informations que les multiplex sortants mais prises directement en sortie de la mémoire tampon. La lecture de la mémoire de commande étant cyclique, la lecture d'un mot de la mémoire de commande donne l'adresse de lecture d'un mot de la mémoire tampon qui contient les informations destinées à la voie temporelle d'un multiplex sortant LS1 à LS8 donné.

L'écriture dans la mémoire tampon 39 est donc effectuée de manière ordonnée par le compteur 45 pendant une demi-période du signal w; pendant l'autre demi-période du signal w la mémoire de commande délivre une adresse de lecture de la mémoire tampon.

Les informations sortant de la mémoire tampon sont appliquées d'une part au convertisseur parallèle-série 40 et d'autre part au récepteur de signalisation 7 par la liaison 9.

Le répartiteur de trafic 6 assure donc le brassage spatial et temporel des informations.

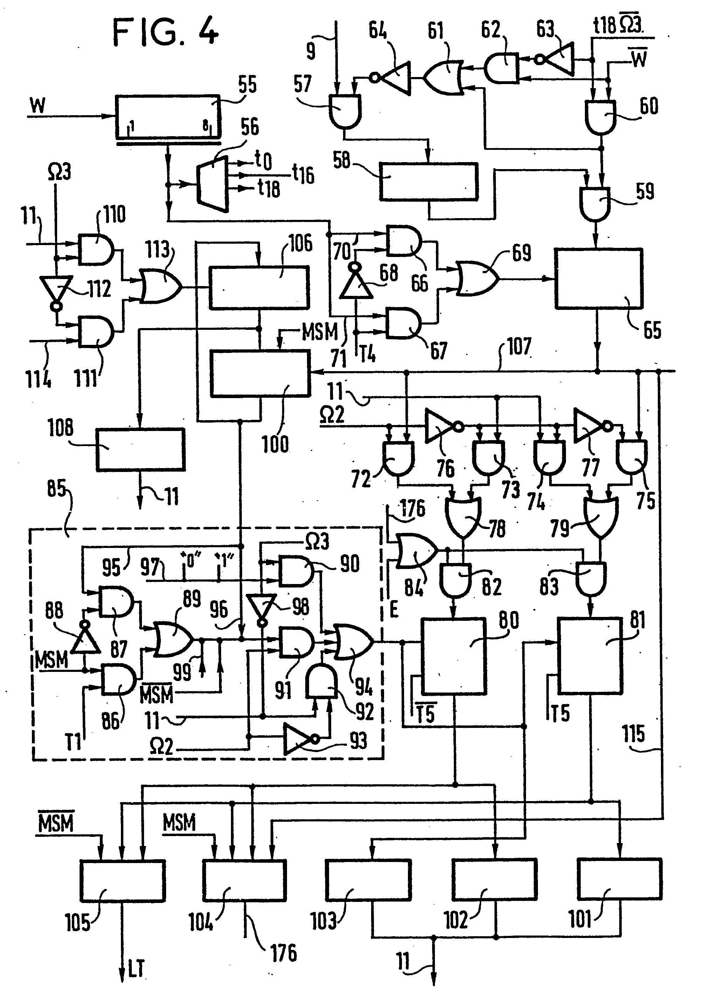

La figure 4 représente le récepteur de signalisation 7 de la figure 1. Un compteur 55, à 8 eb, est cadencé par le signal w de l'horloge locale; en sortie un décodeur 56, relié aux eb 4 à 8, délivre les numéros de voies temporelles to, t16, t18. Une porte ET 57 reçoit la liaison 9, issue du répartiteur de trafic 6; sa sortie est reliée à un registre 58, à 8 eb, dont la sortie est reliée à une porte ET 59. Une porte ET 60 reçoit les signaux $\overline{w}$ et $t18 . \overline{\Omega 3}$, $\overline{\Omega 3}$ étant le sous multiple d'ordre 3 du compteur 55; la sortie de la porte ET 60 est reliée à une entrée de la porte ET 59 et à une entrée d'une porte OU 61. Une porte ET 62 reçoit le signal $\overline{w}$ et est reliée par un inverseur 63 au signal $t18 . \overline{\Omega 3}$; sa sortie est reliée à la porte OU 61 dont la sortie est reliée à travers un inserveur 64 à une entrée de la porte ET 57. La sortie de la porte ET 59 est reliée à une mémoire tampon 65, dans laquelle sont chargés les octets de signalisation présents sur la liaison 9, qui correspondent aux quatre multiplex entrants LE1 à LE4 reliés au répartiteur de trafic, dont le circuit d'adressage est constitué par deux portes ET 66, 67, un inverseur 68 reliant une entrée de chacune des portes ET, et une porte OU 69; la porte ET 66 est reliée par la liaison 70 aux eb 1 et 2 du compteur 55; la porte ET 67 est reliée par la liaison 71 aux eb 5 et 6 du compteur 55; l'inverseur 68 reçoit le signal T 4 qui correspond à l'eb 7 du compteur 55.

En sortie de la mémoire tampon 65 les eb 1 à 4 sont reliés à une porte ET 75 et les eb 5 à 8 sont reliées à une porte ET 72; deux portes ET 73 et 74 sont reliées au bus 11; un signal $\Omega 2$ délivré par l'eb 2 du compteur 55 est appliqué à la porte ET 72, aux portes ET 73, 74 à travers un inverseur 76, puis à la porte ET 75 à travers un inverseur 77. Les portes ET 72 et 73 ont leurs sorties reliées à une porte OU 78; les portes ET 74 et 75 ont leurs sorties reliées à une porte OU 79. La sortie de la porte OU 78 est reliée à une porte ET 82, la sortie de celle-ci étant reliée à une mémoire 80; la sortie de la porte OU 79 est reliée à une porte ET 83, la sortie de celle-ci étant reliée à une mémoire 81.

Une porte OU 84 reçoit, sur une entrée, par une liaison 176, un signal CRE d'un circuit de changement d'état 104 et sur une autre entrée un signal d'écriture E issu du bus 11; la sortie de la porte OU 84 est reliée à une entrée de chacune des portes ET 82, 83. Les mémoires 80 et 81 ont chacune une capacité de 256 mots de 4 eb; chacune des mémoires 80 et 81 peut également recevoir, par les portes ET 73 et 74, 4 eb du bus 11.

Une circuit d'adressage 85 réalise l'adressage simultané des mémoires 80 et 81.

Ce circuit comprend une porte ET 86 recevant sur une entrée un signal T1 de l' eb 4 du compteur 55 et sur une autre entrée un signal MSM; lorsque le module de raccordement dont fait partie le récepteur de signalisation est relié, par les multiplex entrants ME1 à ME4 et sortants MS1 à MS4, figure 1, à un central le signal MSM à la valeur "1"; dans le cas où les multiplex sont reliés à un satellite il a la valeur "0". Le signal MSM est appliqué par un inverseur 88 à une porte ET 87 dont une autre entrée est reliée par une liaison 95 à la sortie d'un circuit de détection de verrouillage multitrame 100. Les sorties des portes ET 86, 87 sont reliées à une porte OU 89 dont la sortie est reliée à une porte ET 91 qui reçoit également: les eb 5 et 6 du compteur 55 par une liaison 99, un signal $\overline{MSM}$, et par une liaison 96 la sortie du circuit de verrouillage multitrame; la porte ET 91 reçoit sur une autre entrée un signal $\Omega2$ délivré par l'eb 2 du compteur 55. Une porte ET 90 est reliée par une liaison 97 aux eb 1 à 7 du compteur 55, et reçoit également un signal de valeur 0 et un signal de valeur 1; elle reçoit sur une autre entrée le signal $\Omega3$ de l'eb 3 du compteur 55. Une porte ET 92 est reliée au bus 11, et au signal $\Omega3$ par un inverseur 98. Les portes ET 90, 91, 92 sont reliées à une porte OU 94 dont la sortie est reliée à chaque entrée d'adressage des mémoires 80 et 81, dont l'adressage peut être effectué par le compteur 55 (porte ET 90) ou par le bus 11 (porte ET 92), ou encore par le circuit de détection de verrouillage multitrame 100 (porte ET 91).

Lors d'un adressage par le compteur l'adresse est donnée par les eb 1 à 7 du compteur et par les signaux de valeur 0 et 1, le signal "1" étant le poids le plus fort de l'adresse, le signal "0" étant le second poids fort. Les mémoires 80 et 81 sont validées simultanément.

Lors d'un adressage par le circuit de verrouillage multitrame, les eb 5 et 6 de la liaison 99 avec le compteur constituent les deux poids faibles de l'adresse, la liaison 96 délivre quatre eb qui constituent les quatre poids suivants; la porte OU 89 délivre un signal qui est le second poids fort de l'adresse, le signal $\overline{MSM}$ constituant le poids fort de l'adresse.

Les mémoires 80 et 81 sont validées tour à tour, la première lorsque le signal T5 de l'eb 8 du compteur 55 a une valeur égale à 0, la seconde lorsque le signal T5 a une valeur 1. Lors d'un adressage par le bus 11 celui ci délivre les huit eb constituant une adresse. Les mémoires 80 et 81 sont validées simultanément.

La sortie de la mémoire 81 est reliée à un premier registre de données 101, la sortie de la mémoire 80 est reliée à un deuxième registre de données 102, la sortie de la porte OU 94 du circuit d'adressage 85 est reliée à un registre d'adresses 103; les sorties des mémoires 80 et 81 sont reliées à un circuit de changement d'état 104 également relié à la sortie de la mémoire tampon 65 par une liaison 115; les sorties des mémoires 80 et 81 sont reliées au circuit de signalisation 105 qui est relié en sortie aux liaisons LT. Les registres 101, 102, 103 sont reliées en sortie au bus 11.

Le circuit de détection de verrouillage multitrame 100 est relié en entrée à la sortie d'une mémoire d'état 106 dont l'entrée est reliée à la sortie du circuit de détection de verrouillage multitrame. Le circuit de détection de verrouillage multitrame est également relié par une liaison 107 à la sortie de la mémoire tampon 65. La sortie de la mémoire d'état est également reliée à un registre d'état 108 dont la sortie est reliée au bus 11.

L'adressage de la mémoire d'état est effectué par deux portes ET 110 et 111 reliées en entrée par un inverseur 112; les sorties des portes ET sont reliées à une porte OU 113 dont la sortie délivre les adresses à la mémoire d'état. La porte ET 110 et l'inverseur 112 reçoivent le signal $\Omega3$ de l'eb 3 du compteur 55; une autre entrée de la porte ET 110 est reliée au bus 11, et une autre entrée de la porte ET 111 est reliée par la liaison 114 aux eb 5 et 6 du compteur 55.

Le récepteur de signalisation a pour rôle de détecter les changements d'état de signalisation, et d'émettre, après un éventuel transcodage, la signalisation sur les liaisons LT. Les quatre octets de signalisation transitant sur la liaison 9 sont pris en compte dans le registre 58 et stockés dans la mémoire tampon 65. Deux cas sont à examiner: premier cas le module de raccordement est relié à un central, le signal MSM a la valeur 1; deuxième cas le module de raccordement est relié à un satellite, le signal MSM à la valeur 0. CAS M S M=1.

Les mémoires 80 et 81 sont divisées en quatre secteurs de 64 mots chacun; le premier secteur mémorise la signalisation RON, reçue dans la multitrame précédente, le deuxième secteur mémorise la signalisation RON confirmée, le troisième secteur mémorise la signalisation à émettre sur la liaison LT, c'est-à-dire les éléments c et d de cette signalisation.

Durant les voies temporelles paires appartenant aux second et dernier quart de la trame, les échantillons disponibles en sortie de la mémoire tampon 65 sont comparés aux échantillons "précédents" mémorisés dans le premier secteur; la comparaison est effectuée par le circuit de changement d'état 104. La non-identité active un signal d'écriture CRE qui par le fil 176 autorise le chargement des mémoires 80 et 81.

Durant les voies temporelles impaires suivantes, ces mêmes échantillons sont comparés aux échantillons "confirmés" mémorisés dans le deuxième secteur. La non-identité active le signal d'écriture CRE, et un signal d'interface qui est transmis à l'interface de commande par le bus 11; le signal d'écriture permet le chargement du registre d'adresses 103 qui mémorise les coordonnées de changement d'état. Lorsque le signal d'interface est émis l'interface de commande, après lecture du registre d'adresses 103, on recherche dans les mémoires 80 ou 81 la nouvelle signalisation confirmée; cette signalisation est inscrite, après transcodage dans le troisième secteur des mémoires, afin d'être émise sur les liaisons LT,

Cas M S M=0.

Les mémoires 80 et 81 sont toujours divisées en quatre secteurs de 64 mots mais les deux premiers secteurs ne sont pas utilisés; le troisième secteur mémorise la signalisation voie par voie transmise par les voies temporelles t16 des seize premières trames des multiplex entrants ME1 à ME4 dans le module de raccordement; le quatrième secteur mémorise la signalisation sur voie commune transmise par les voies temporelles t16 des seize dernières trames des multiplex entrants, la signalisation étant portée par une multitrame constituée de 32 trames.

Quel que soit le type de signalisation (voie par voie ou sur voie commune) l'état de la signalisation sur la liaison 9, qui se retrouve en sortie de la mémoire tampon 65, est comparé à l'état confirmé (il n'y a plus de secteur pour l'état précédent dans ce cas). La non-identité active le signal d'écriture CRE et permet l'inscription dans le troisième secteur des mémoires 80 ou 81 pour la signalisation voie par voie, afin d'être émise sur la liaison LT, et dans le quatrième secteur pour la signalisation commune qui sera lue par l'interface de commande.

Dans les deux cas MSM=1 et MSM=0 l'interface de commande 3 a accès aux mémoires 80 et 81 pour écriture et lecture au début de chaque voie temporelle, au registre d'adresse 103 pour remise à zéro et lecture, à la mémoire d'état 106 pour lecture durant la seconde moitié d'une voie temporelle.

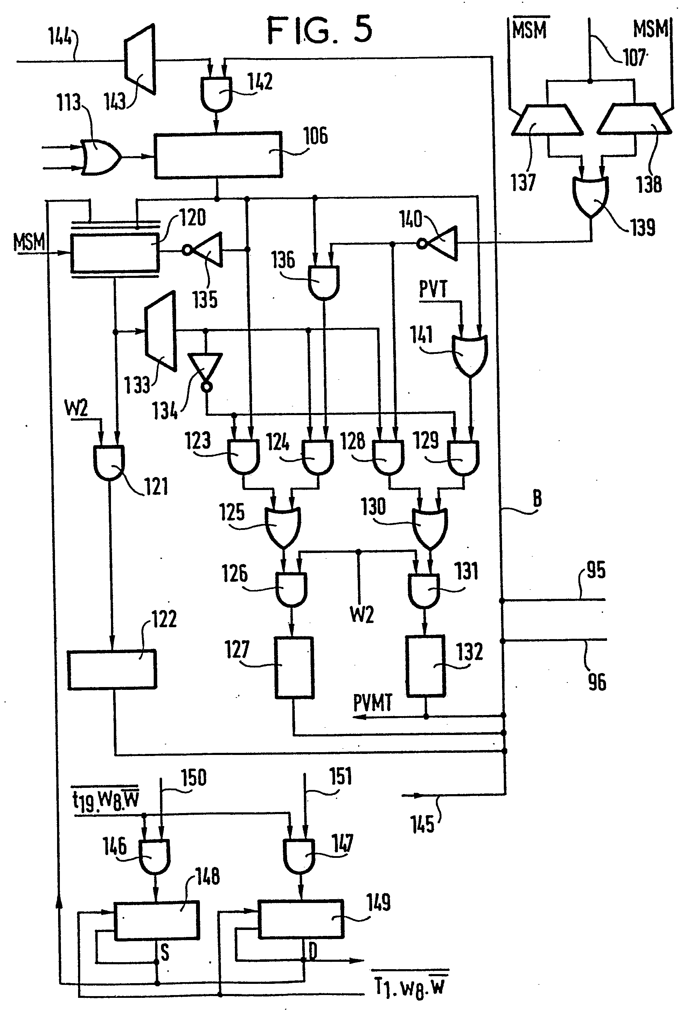

La figure 5 représente le circuit de détection de verrouillage multitrame 100 et la mémoire d'état 106 de la figure 4. Les eb 1 à 5 de la mémoire d'état sont reliés à une entrée d'un calculateur 120, qui est par exemple un boîtier 74181 de TEXAS INSTRUMENTS; le calculateur reçoit un signal MSM, et son poids fort et forcé à 0 lorsque MSM=1. La sortie, soit 5 eb, du calculateur est reliée à une porte ET 121 qui reçoit un signal w2 deuxième temps élémentaire d'une voie temporelle; la sortie de la porte ET est reliée à un registre 122, à 5 eb dont la sortie est reliée à un bus B. Deux portes ET 123, 124 ont leurs sorties reliées à une porte OU 125 dont la sortie est reliée à une porte ET 126 recevant le signal w2 et reliée en sortie à un registre unitaire 127 lui même relié en sortie au bus B. Deux portes ET 128, 129 sont reliées en sortie à une porte OU 130 dont la sortie est reliée à une porte ET 131 recevant le signal w2, et reliée en sortie à un registre unitaire 132 lui-même relié en sortie au bus B.

Un décodeur 133 relié en sortie du calculateur décode l'adresse 0; sa sortie est reliée aux portes ET 124 et 128; sa sortie est en outre reliée par un inverseur 134 aux portes ET 123 et 129.

L'eb 7 de la mémoire d'état 106 est relié à la porte ET 123 et à un inverseur 135 relié à une entrée de validation du calculateur. L'eb 6 de la mémoire d'état est relié à une porte ET 136 dont la sortie est reliée à la porte ET 124.

Deux décodeurs 137 et 138 sont reliés par la liaison 107 à la mémoire tampon 65 de la figure 4. Le décodeur 137 est validé par le signal $\overline{MSM}$ s'il a la valeur 1; le décodeur 138 est validé par le signal MSM s'il a la valeur 1. Le décodeur 137 reçoit les eb 1 à 5, 7, 8 de la mémoire tampon et décode le nombre 112, le décodeur 138, reçoit les eb 1 à 4 de la mémoire tampon et décode le nombre 0. Les sorties des décodeurs sont reliées à une porte OU 139 dont la sortie est reliée, à travers un inverseur 140, aux portes ET 128 et 136. Une porte OU 141 reçoit l'eb 6 de la mémoire d'état 106 et un signal perte de verrouillage trame PVT provenant d'un regroupement des signaux de perte de verrouillage de trame de chacun des dispositifs de synchronisation 5. Le bus B est constitué de 8 eb et est relié à l'entrée d'une porte ET 142 qui reçoit également un signal de sortie d'un décodeur 143 dont l'entrée est reliée par la liaison 144 aux eb 4, 7, 8 du compteur 55 de la figure 4 et qui décode le nombre 3. Les eb du bus B proviennent de 1 à 5 du registre 122, 6 du registre unitaire 132,7 du registre unitaire 127; un eb 8 est donné par une liaison 145 qui provient de l'émetteur de signalisation 8 de la figure 1, après regroupement des alarmes sur les liaisons LVS.

Une porte ET 146 est reliée en sortie à un registre 148; une porte ET 147 est reliée en sortie à un registre 149. Un signal $\overline{t19}.\overline{W8}.\overline{w}$ est appliqué à chacune des portes ET 146 et 147. Les registres, du type parallèle, ont 4 eb chacun; l'eb 1 de sortie de chaque registre est rebouclé sur l'entrée; la progression dans le registre est commandée par le signal $\overline{T1}.w8.\overline{w}$; la sortie de chaque registre est constituée par les eb 1 et 3. Une entrée de la porte ET 146 reçoit sur une liaison 150 un signal de chacun des dispositifs de synchronisation 5 de la figure 1; une entrée de la porte ET 147 reçoit sur une liaison 151 un signal de chacun des dispositifs de synchronisation 5. En sortie du registre 148 on a donc un signal S lorsqu'il y a saut d'une trame dans le dispositif de synchronisation et en sortie du registre 149 on a un signal D lorsqu'il y a doublement d'une trame dans le dispositif de synchronisation. La sortie des registres 148 et 149 est reliée à une deuxième entrée du calculateur 120.

En désignant par A le signal sur la première entrée du calculateur et par F le signal de sortie du calculateur, on a la table de vérité suivante:

| D | S | F |
|---|---|---|
| 0 | 0 | F=A+1 |
| 1 | 0 | F=A |
| 0 | 1 | F=A+2 |
| 1 | 1 | X |

On a également pour:

| M S M=0 | $0 \leqslant F \leqslant 31$ |
|---|---|
| M S M=1 | $0 \leqslant F \leqslant 15$ |
| signal de validation du calculateur=0 | F=0 |

Les eb 1 à 5 de la mémoire d'état 106, appliqués sur la première entrée du calculateur déterminent le numéro de la trame associée à un octet de signalisation.

L'état de synchronisme du canal de signalisation est caractérisé par deux eb:

| 00 | état synchronisé |
|---|---|
| 01 | état synchronisé+1 perte de mot de |
| de | verrouillage multitrame |
| 11 | état désynchronisé |

En état désynchronisé le calculateur est forcé à zéro et la signalisation est scrutée en permanence.

La conformité avec le mot de verrouillage multitrame permet:

le passage de l'état désynchronisé à l'état synchronisé, et les trames suivantes,

l'incrémentation du compteur de numéro de trame (il s'agit des eb 1 à 5 de la mémoire d'état).

A partir de l'état synchronisé il faur déceler l'absence du mot de verrouillage multitrame dans deux trames 0 consécutives pour atteindre l'état désynchronisé. Le compteur de numéro de trame a son poids fort, eb 5, forcé à zéro dans le cas où M S M=1 puisque la multitrame n'est constituée dans ce cas que de seize trames (module de raccordement relié à un central); l'eb 5 est forcé à zéro dans le calculateur. En l'absence de perturbation introduite par le dispositif de synchronisation associé, saut ou doublement d'une trame, l'opération effectuée sur le numéro de trame précédent et mémorisée dans la mémoire d'état, est une incrémentation de 1. Lors d'un saut d'une trame l'opération est une incrémentation de 2, et lors du doublement d'une trame l'opération est l'identité comme cela est illustré par la table de vérité donnée ci-dessus. La nouvelle valeur, chargée dans le registre 122, adresse les mémoires 80 et 81 par les liaisons 95 (eb 5) et 96 (eb 1 à 4), mémoires dans lesquelles sont stockées les signalisations reçues lors des multitrames antérieures durant le deuxième quart de chaque voie temporelle.

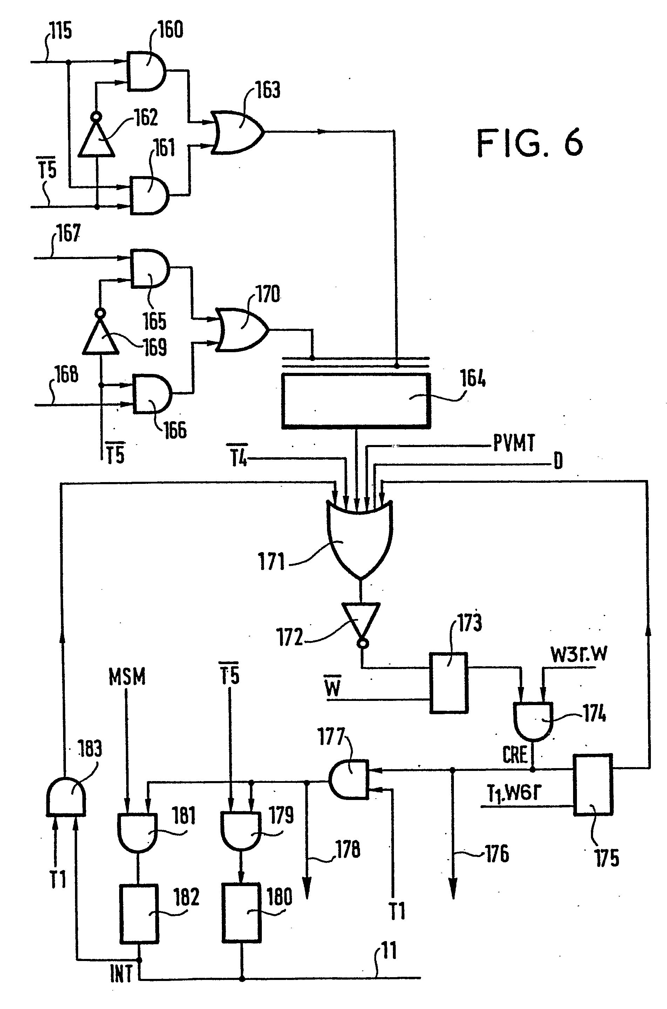

La figure 6 représente le circuit de changement d'état 104 de la figure 4. Deux portes ET 160, 161 sont reliées par la liaison 115 à la sortie de la mémoire tampon 65, la porte ET 160 recevant les eb 1 à 4 et la porte ET 161 recevant les eb 5 à 8. Le signal $\overline{T5}$ correspondant à la valeur 0 de l'eb 8 du compteur 55 (figure 4) est appliqué à la porte ET 161, et à travers un inverseur 162 à la porte ET 160. Les sorties des portes ET sont reliées à une porte OU 163 dont la sortie est reliée à une entrée d'un comparateur 164.

Une porte ET 165 est reliée par une liaison 167 à la mémoire 81; une porte ET 166 est reliée par une liaison 168 à la mémoire 80; le signal $\overline{T5}$ est appliqué à la porte ET 166, et à travers un inverseur 169 à la porte ET 165. Les sorties des portes ET sont reliées à une porte OU 170 dont la sortie est reliée à une autre entrée du comparateur 164. La sortie du comparateur est reliée à une porte OU 171 dont la sortie est reliée par un inverseur 172 à un point mémoire 173 qui reçoit également le signal w. La sortie du point mémoire est reliée à une porte ET 174 qui reçoit un signal w3r . w (w3r est le signal w3 retardé d'une demi période). La porte ET 174 délivre un signal CRE à un point mémoire 175 qui reçoit également un signal T1 . w6r; la sortie du point mémoire 175 est reliée à une entrée de la porte OU 171. Le signal CRE est envoyé par la liaison 176 à une entrée de la porte OU 84 (figure 4) pour commander l'écriture dans ces mémoires comme indiqué lors de la description de la figure 4. Le signal CRE est également appliqué à une porte ET 177 qui reçoit le signal T1 (eb 4 du compteur 55). Le signal sortant de la porte ET 177 est envoyé par une liaison 178 à l'entrée du registre d'adresses 103 (figure 4) pour commander l'écriture dans ce registre; il est également appliqué à une porte ET 179 qui reçoit le signal $\overline{T5}$, sa sortie étant reliée à un registre unitaire 180 relié en sortie au bus 11. Le signal sortant de la porte ET 177 est aussi appliqué à une porte ET 181 qui reçoit le signal MSM; la sortie de la porte ET est reliée à un registre unitaire 182 dont la sortie délivre le signal d'interface INT au bus 11 et à une porte ET 183 qui reçoit le signal T1. La sortie de la porte ET 183 est reliée à une entrée de la porte OU 171 qui reçoit également un signal $\overline{T4}$, un signal perte de verrouillage multitrame PVMT du registre unitaire 132 (figure 5), et un signal doublement de trame D du registre 149 (figure 5). Les

signaux $\overline{T4}$, D, PVMT, et ceux délivrés par la porte ET 183 et la bascule 174 masquent les non-identités détectées par le comparateur 164 qui effectue la comparaison entre un signal de signalisation présent à la sortie de la mémoire tampon 65 et le signal lu dans les mémoires 80 et 81. Une non-identité pendant une voie temporelle paire active le signal CRE et la bascule 175 dont la sortie vient inhiber la porte OU 171, ce qui inhibe le traitement pendant la voie impaire suivant... Une non-identité pendant une voie temporelle impaire active le signal CRE, la porte ET 177, le registre 180, si le signal T5 a une valeur 1, puis le registre unitaire 182 qui délivre le signal INT au bus 11, si le signal MSM a une valeur 1, le signal INT venant par la porte ET 183 inhiber la porte OU 171 pendant les voies temporelles impaires suivantes.

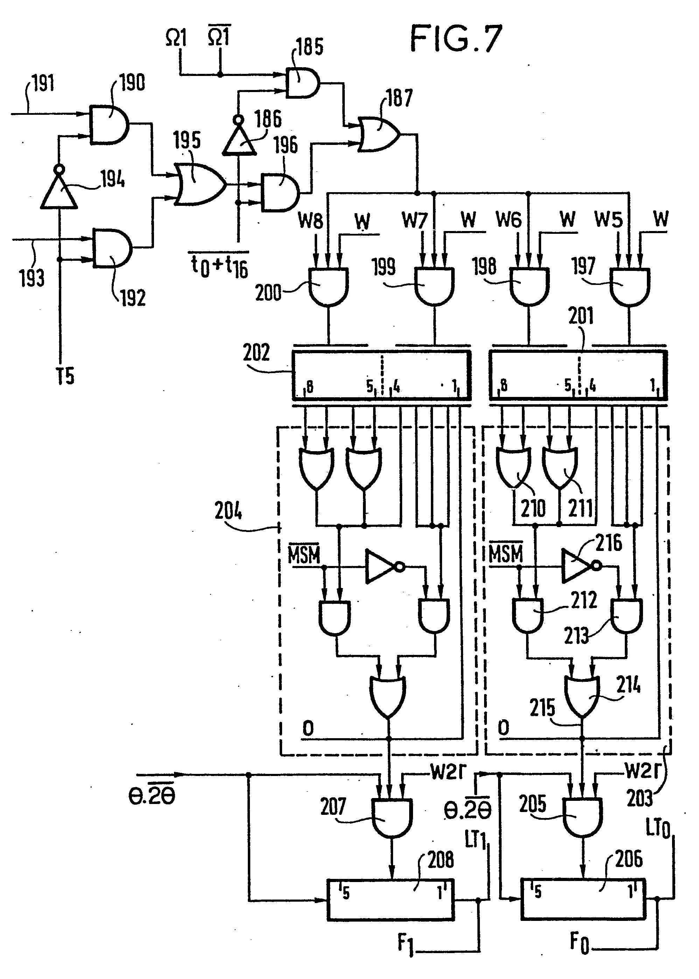

La figure 7 représente le circuit de signalisation 105 de la figure 4, circuit qui émet la signalisation sur les liaisons LT. Une porte ET 190 est reliée par une liaison 191 à la sortie de la mémoire 81 de laquelle elle reçoit les eb 1 à 4 de la signalisation; une porte ET 192 est reliée par une liaison 193 à la sortie de la mémoire 80 de laquelle elle reçoit les eb 5 à 8 de signalisation. Un signal T5 est appliqué à la porte ET 192 et par un inverseur 194 à la porte ET 190. Les sorties des portes ET sont reliées à une porte OU 195 reliée en sortie à une porte ET 196 qui reçoit le signal $\overline{to+t16}$. La sortie de la porte ET 196 est reliée à une entrée d'une porte OU 187 dont une autre entrée est reliée à une porte ET 185; cette dernière reçoit sur une entrée les signaux $\Omega1$ et $\overline{\Omega1}$ issus de l'eb 1 du compteur 55, et une autre entrée est reliée à travers un inverseur 186 à une entrée de la porte ET 196. Quatre portes ET 197, 198, 199, 200 ont une entrée reliée à la sortie de la porte OU 187, et recoivent le signal w; la porte ET 197 reçoit le signal w5, la porte ET 198 reçoit le signal w6, la porte ET 199 reçoit le signal w7, la porte ET 200 reçoit le signal w8.

Un registre 201, à 8 eb, du type parallèle-parallèle est relié à la sortie des portes ET 197, 198. Un registre 202, à 8 eb, du type parallèle-parallèle, est relié à la sortie des portes ET 199, 200.

En sortie du registre 201, un circuit de regroupement 203 est relié en sortie à une porte ET 205 qui reçoit les signaux w2r et $\theta.\overline{2\theta}$, $\theta$ étant un signal de 2,56 MHz délivré par la base de temps du central. La porte ET 205 est reliée à un registre 206, à 5 eb, du type parallèle-série, commandé par le signal $\theta.\overline{2\theta}$, dont la sortie est reliée à une liaison LTo, et une liaison Fo.

En sortie du registre 202 un circuit de regroupement 204, identique à 203 est relié en sortie à une porte ET 207 qui reçoit les signaux w2r et $\theta.\overline{2\theta}$. La porte ET 207 est reliée à un registre 208, à 5 eb, du type parallèle-série, commandé par le signal $\theta.\overline{2\theta}$, dont la sortie est reliée à une liaison LT1 et à une liaison F1. Les deux liaisons LTo et LT1 constituent la liaison LT de la figure 1. Les deux liaisons Fo et F1 sont utilisées pour des opérations de test; elles sont reliées à l'émetteur de signalisation 8 de la figure 1.

Le circuit de regroupement 203 comprend: une porte OU 210 reliée aux eb 4 et 8 du registre 201, une porte OU 211 reliée aux eb 3 et 7, une porte ET 212 reliée à la sortie des portes 210 et 211 et à l'eb 6 du registre 201, une porte ET 213 reliée aux eb 2, 5, 6 du registre 201, une porte OU 214 reliée aux portes ET 212 et 213. La sortie de la porte OU 214 est reliée à la porte ET 205 par une liaison 215 qui achemine également l'eb 1 du registre et un signal 0. Le signal $\overline{MSM}$ est appliqué à la porte ET 212 et, à travers un inverseur 216, à la porte ET 213.

Dans le registre 206 l'eb 1 correspond à l'eb 1 du registre 201, l'eb 2 à l'eb 2 ou à l'un des eb 3 ou 7 du registre 201, l'eb 3 au signal 0, l'eb 4 à l'eb 5 ou 6 du registre 201, l'eb 5 à l'eb 6 ou à l'un des eb 4 et 8 du registre 201.

Le circuit de regroupement 204 étant identique au circuit 203, la correspondance entre les eb du registre 208 et ceux du registre 202 est la même que celle indiquée ci-dessus.

Les eb des mémoires 80 et 81 sont chargés dans les registres 201, 202 à la fin des instants w5, w6, w7, w8. Après regroupement des eb dans les circuits de regroupement 203, 204, ces eb de signalisation sont chargés dans les registres 206, 208 et émis en série sur les liaisons LTo et LT1. Le regroupement des eb dans les circuits de regroupement dépend du signal $\overline{MSM}$; les eb des registres 206 et 208 ne reçoivent donc pas les mêmes eb des registres 201 et 202 selon que le module de regroupement dont fait partie le circuit de signalisation représenté figure 5, est relié à un central ou a un satellite.

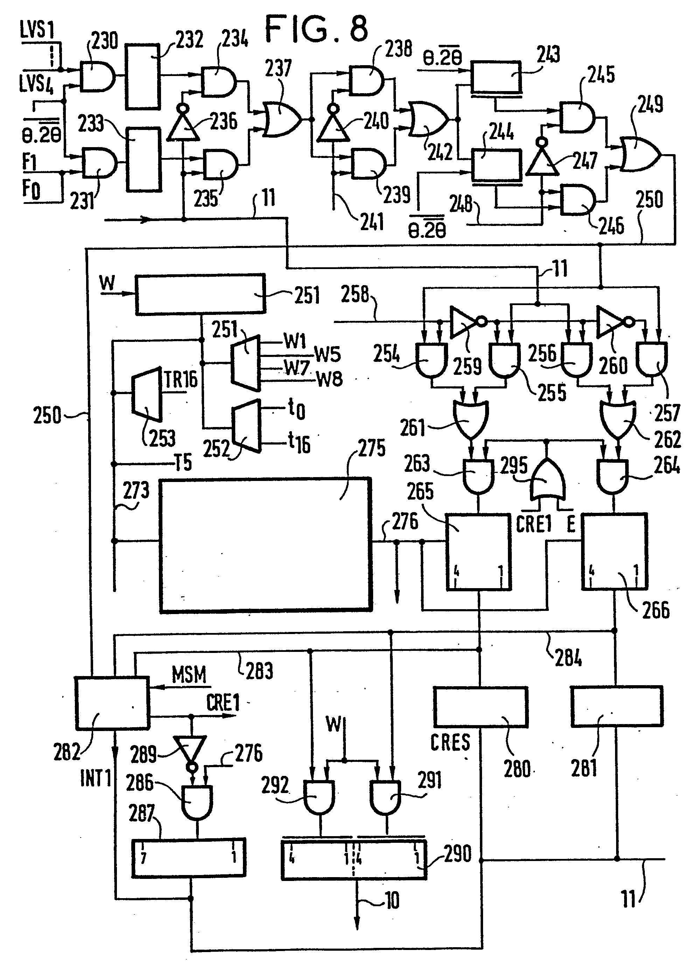

La figure 8 représente l'émetteur de signalisation 8 de la figure 1. Une porte ET 230 reçoit les liaisons de signalisation LVS1 à LVS4 de la figure 1, et qui acheminent la signalisation à émettre sur les multiplex sortants, LS1 à LS4, du répartiteur de trafic 6, figure 1. Une autre porte ET 231 reçoit les liaisons Fo, F1 reliées en sortie des registres 206, 208 de la figure 7, les signalisations acheminées par ces liaisons étant uniquement utilisées pour des tests. Les portes ET 230, 231 sont activées par un signal $\theta\,\overline{2\theta}$. La sortie de la porte ET 230 est reliée à un registre 232 à 4 eb, dont la sortie est reliée à une porte ET 234; la sortie de la porte ET 231 est reliée à un registre 233, à 4 eb, dont la sortie est reliée à une porte ET 235.

Le bus 11 est relié à une entrée de la porte ET 235, et par un inverseur 236 à une entrée de la porte ET 234. L'interface de commande 3, figure 1, active, par le bus 11, la porte ET 235 pour des tests, qui sont donc effectués à partir des signalisations acheminées par les liaisons Fo, F1. Les sorties des portes ET 234, 235 sont reliées à une porte OU 237 dont la sortie est reliée à deux portes ET 238, 239, la porte ET 238 recevant les eb impairs, 1, 3 du registre 232 (ou du registre 233), la porte ET 239 recevant les eb pairs, 2, 4 du registre 232 (ou du registre 233). Une liaison 241, acheminant l'eb 9 d'un compteur 251, est reliée à la porte ET 239, et par un inverseur 240 à la porte ET 238. Les portes ET 238, 239 sont reliées en sortie à une porte OU 242 dont la sortie est reliée à deux registres 243, 244, du type série-parallèle possédant respectivement six et sept pas. Le registre 243 est commandé par un signal $\overline{\theta}.\overline{2\theta}$, le registre 244 étant commandé par un signal $\overline{\theta}.\overline{2\theta}$. Pendant une trame, définie par l'eb 9 du compteur, le registre 243 stocke la signalisation relative à la liaison LVS1 et le registre 244 celle relative à la liaison LVS3; pendant la trame suivante le registre 243 stocke la signalisation de la liaison LVS2 et le registre 244 celle de la liaison LVS4. La sortie du registre 243 est reliée à une porte ET 245, et la sortie du registre 244 est reliée à une porte ET 246. Une liaison 248 reliée à l'eb 2 du compteur est reliée à la porte ET 246, et par un inverseur 247 à la porte ET 245.

Les sorties des portes ET 245, 246 sont reliées à une porte OU 249 dont la sortie est reliée à une liaison 250.

Le compteur 251, à 13 eb, est commandé par le signal w.

Un décodeur 285, relié aux eb 1 à 3 du compteur, délivre les signaux w1, w5, w7, w8, correspondant aux numéros 0, 4, 6, 7.

Un décodeur 252, relié aux eb 4 à 8 délivre les signaux de voies temporelles to, t16, correspondant aux numéros décodés 0, 16.

Un décodeur 253, relié aux eb 9 à 13 du compteur, délivre un signal trame seize, TR 16, correspondant au numéro décodé 16. Le signal T5 correspond à l'eb 8 du compteur.

Deux portes ET 254, 257 sont reliées à la porte ET 249 par la liaison 250; deux autres portes ET 255, 256 sont reliées au bus 11 duquel elle reçoivent les signalisations TRON et sémaphore. Une liaison 258, reliée à l'eb 3 du compteur, est reliée à la porte ET 254 et à travers un inverseur 259 aux portes ET 255, 256, puis à travers un autre inverseur 260 à la porte ET 257. Une porte OU 261 regroupe les sorties des portes ET 254, 255; une porte OU 262 regroupe les sorties des portes ET 256, 257. La sortie de la porte OU 261 est reliée à une porte ET 263, et la sortie de la porte OU 262 est reliée à une porte ET 264; les portes ET 263, 264 reçoivent un signal de la sortie d'une porte OU 295 pour écriture dans deux mémoires 265, 266, de 256 mots de 4 eb chacune, divisées en quatre secteurs égaux de 64 mots. Une entrée de la porte OU 295 reçoit un signal CRE1, et une autre entrée reçoit un signal d'écriture E du bus 11.

Dans les mémoires 265, 266, les second et troisième secteurs sont utilisés dans le cas d'un module de raccordement relié à un central (MSM=1), le second secteur est affecté à la réception des éléments de signalisation a et b acheminés par les liaisons LVS; le troisième secteur est affecté aux éléments de signalisation TRON.

Dans le cas d'un module de raccordement relié à un satellite, MSM=0, ce sont les troisième et quatrième secteurs qui sont utilisés; le troisième secteur est affecté à la signalisation voie par voie, et le quatrième secteur est affecté à la signalisation par canal sémaphore.

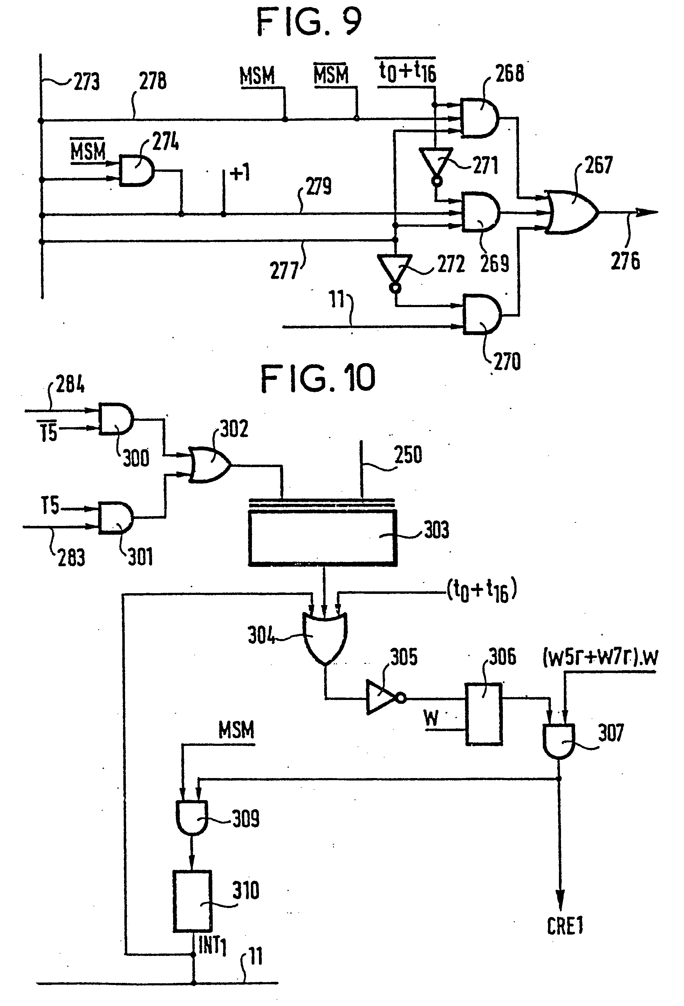

Les mémoires sont adressées en parallèle par un circuit d'adressage 275 représenté figure 9 et décrit ci-après.

Une porte OU 267 est reliée par une liaison 276 à une entrée d'adressage de chacune des mémoires 265, 266. Trois portes ET 268, 269, 270 ont leurs sorties reliées à la porte OU 267. Une liaison 273 est reliée à la sortie du compteur 251 et achemine les eb de ce compteur. Un signal $\overline{to+t16}$ est appliqué à la porte ET 268. Les portes ET 268, 269 sont reliées par une liaison 277 à la liaison 273 et en reçoivent l'eb 3; la porte ET 270 est reliée par un inverseur 272 à l'eb 3 du compteur. La porte ET 268 est reliée par une liaison 278 à la liaison 273 et reçoit les eb 9, 2, 4, 5, 6, 7 du compteur, ainsi qu'un signal $\overline{MSM}$ qui constitue le poids le plus fort de l'adresse, et un signal MSM qui constitue le second poids fort de l'adresse. Quand MSM=1 les premier, deuxième et quatrième secteurs des mémoires ne sont pas adressés; quand MSM=0, donc $\overline{MSM}$=1, les trois premiers secteurs ne sont pas adressés. La porte ET 269 est reliée par une liaison 279 à la liaison 273 et reçoit les eb 1, 2, 9, 10, 11, 12 du compteur; elle est également reliée à un signal+1 qui constitue le poids le plus fort de l'adresse; une porte ET 274 reçoit l'eb 13 du compteur et le signal $\overline{MSM}$, et sa sortie est reliée à la porte ET 269, le signal délivré par cette porte ET 274 consitue le second poids fort de l'adresse fournie par la porte ET 269. Quand le signal $\overline{MSM}$=1 le quatrième secteur des mémoires n'est adressé que pendant le temps ou l'eb 13 a la valeur 1; quand l'eb 13 a la valeur 0 c'est le troisième secteur qui est adressé; quand $\overline{MSM}$=0 seul le troisième secteur est adressé. La porte ET 270 est reliée au bus 11 qui délivre les adresses de lecture et d'écriture des mémoires. Les mémoires 265 et 266 sont toujours validées à une exception: lorsque l'adresse des mémoires est fournie par la porte ET 268 la mémoire 265 est validée pendant la première moitié de la trame, la mémoire 266 pendant la seconde moitié.

Les mémoires 265 et 266 de la figure 8 sont reliées en sortie à deux registres 280, 281, respectivement, ces registres étant du type parallèle-parallèle d'une capacité de 4 eb; leurs sorties sont reliées au bus 11. Les mémoires 265, 266 sont également reliées en sortie à un circuit de changement d'état 282 par deux liaisons 283, 284 respectivement; le circuit de changement d'état est relié par la liaison 250 à la sortie de la porte OU 249. Le circuit de changement d'état délivre un signal INT1 au bus 11, et un signal CRE1 à la porte OU 295 (figure 8), et à travers un inverseur 289 à une porte ET 286 reliée en sortie à un registre d'adresse 287, de type parallèle-parallèle, relié en sortie au bus 11. La porte ET 286 est également reliée en entrée par la liaison 276 à la sortie du circuit d'adressage 275. Le registre d'adresse 287 a 7 eb.

Un registre de signalisation 290 est relié en sortie par la liaison 10 au répartiteur de trafic 6 de la figure 1; ce registre, d'une capacité de 8 eb, du type parallèle-parallèle, est divisé en deux secteurs de 4 eb un secteur étant relié à la sortie d'une porte ET 291, l'autre secteur étant relié à la sortie d'une porte ET 292. Les deux portes ET 291, 292 reçoivent le signal w. La porte ET 291 est reliée à la sortie de la mémoire 266. La porte ET 292 est reliée à la sortie de la mémoire 265.

La figure 10 représente le circuit de changement d'état 282. Une porte ET 300 est reliée en entrée par la liaison 284, à la sortie de la mémoire 266, et reçoit le signal $\overline{T5}$; une porte ET 301 est reliée, par la liaison 283, à la sortie de la mémoire 265, et reçoit le signal T5.

Les sorties des portes ET 300, 301 sont reliées à une porte OU 302 dont la sortie est reliée à une entrée d'un comparateur 303; une autre entrée du comparateur est reliée, par la liaison 250, à la sortie de la porte OU 249. La sortie du comparateur est reliée à une porte OU 304 dont la sortie est reliée à un point mémoire 306 par un inverseur 305; le point mémoire reçoit également le signal w, et sa sortie est reliée à une porte ET 307, qui reçoit le signal (w5r+w7r). w, et délivre le signal CRE 1 en sortie. Une porte ET 309 est reliée à la sortie de la porte ET 307. Un signal MSM est appliqué à la porte ET 309 dont la sortie est reliée à un registre unitaire 310. La sortie du registre unitaire 310 est reliée à la porte OU 304 et au bus 11 auquel elle délivre le signal INT 1. Une non identité entre les signaux sur les entrées du comparateur 303 fait passer le point mémoire 306 à l'état 1, et la porte ET 307 délivre un signal CRE 1; le registre unitaire délivre le signal INT1 au bus 11 et sa sortie vient activer la porte OU 304, laquelle est également activée par un signal (to+t16).

L'émetteur de signalisation de la figure 8 a pour rôle de détecter les changements sur les liaisons de signalisation LVS1 à LVS4 qui constituent une liaison LVS de la figure 1, et d'émettre les signalisations vers le répartiteur de trafic 6 de la figure 1, lorsque le signal CRES, signal t16.Ω3 retardé d'une demi période du signal w, a une valeur 1.

Les mémoires 265 et 266 reçoivent des informations soit du bus 11 soit des liaisons LVS1 à LVS4. Les mémoires sont adressées soit par l'interface de commande à l'aide du bus 11 durant la première moitié de chaque voie temporelle (signal Ω3 correspondant à l'eb 3 du compteur 251), soit par le compteur 251 durant la seconde moitié de chaque voie temporelle.

Pendant les voies temporelles différentes de to et t16 le compteur permet le prélèvement de l'échantillon confirmé qui sera comparé à l'échantillon correspondant porté par l'une des liaisons LVS1 à LVS4; en cas de non identité ce dernier échantillon remplacera l'échantillon confirmé dans le second secteur des mémoires (adresses 64 à 127) dans le cas d'un module de raccordement relié à un central (signal MSM=1) ou dans le troisième secteur des mémoires (adresses 128 à 191) dans le cas où le signal MSM=0.

De plus dans le cas MSM=1, l'interface de commande a connaissance du changement d'état par le signal INT1 délivré par le circuit de changement d'état 282, changement dont les coordonnées sont disponibles dans le registre 287 relié à la sortie du circuit d'adressage 275 des mémoires; cette donnée est réinscrite après transcodage dans le troisième secteur des mémoires. Les signalisations traitées sont au nombre de quatre: celles des liaisons LVS1 et LVS3 pendant les trames paires, et celles des liaisons LVS2 et LVS4 pendant les trames impaires.

Pendant les voies temporelles to et t16 le compteur permet la lecture de la signalisation à émettre vers le répartiteur de trafic 6, c'est-à-dire la signalisation voie par voie contenue dans le troisième secteur des mémoires, et la signalisation sémaphore (cas de MSM=0) contenue dans le quatrième secteur des mémoires. Pour cette dernière signalisation en l'absence de message significatif, il est émis un code dit de bourrage. D'autre part, un message sémaphore n'est émis que s'il a été écrit en totalité par l'interface de commande. Ces fonctions sont réalisées par un montage articulé autour d'une mémoire de quatre mots d'un eb, adressée par les deux eb de poids faible de la liaison 276. En l'absence de message, le mot de la mémoire associé a une valeur égale à zéro, et il est émis un code de bourrage. Lorsque le message est écrit en totalité, l'interface de commande par le bus 11 marque le mot de la mémoire à 1, ce qui autorise l'émission du message dès que l'eb 13 du compteur 251 prend la valeur 1.

Les temps de sortie des quatre échantillons de signalisation correspondant à chaque liaison LVS1 à LVS4 sont t16.w5, t16.w6, t16.w7, t16.w8.

L'interface de commande à accès, par le bus 11 aux mémoires 265, 266 en écriture et lecture durant la première moitié d'une voie temporelle (w1 à w4), au registre unitaire 310 pour remise à zéro et lecture, et au registre d'adresse 287 pour lecture.

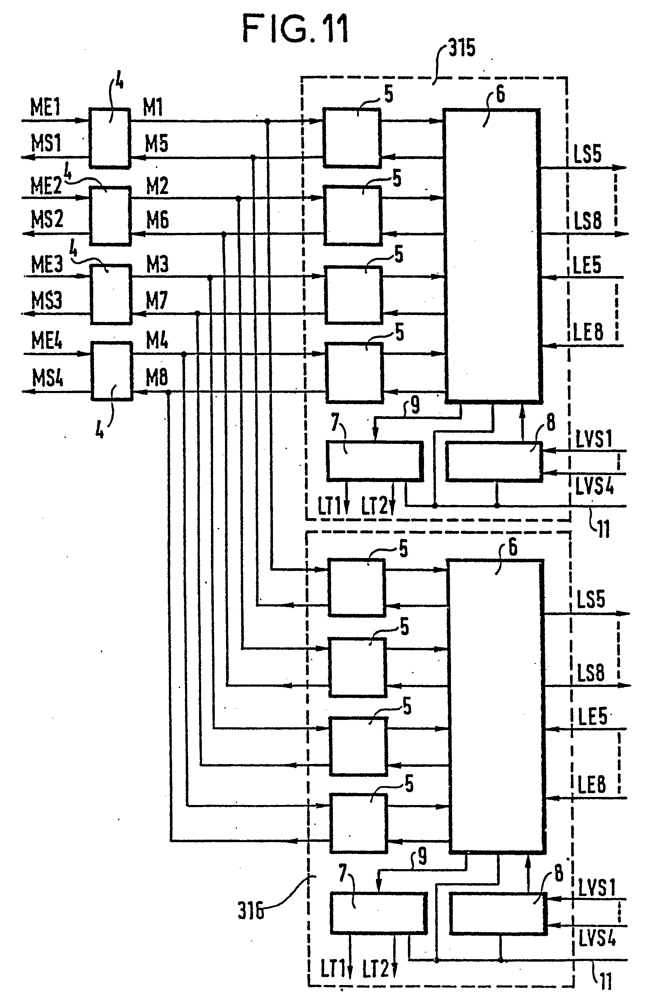

La figure 11 représente deux sous-ensembles 315, 316, identiques, reliés à quatre transcodeurs 4; il est en effet souhaitable pour des raisons de sécurité de fonctionnement de doubler certains organes d'un module de raccordement de la figure 1.

Dans cette figure 11 les transcodeurs 4 ne sont pas doublés; chaque sous-ensemble comporte donc, comme dans le module de raccordement, quatre dispositifs de synchronisation 5 reliés aux transcodeurs, un répartiteur de trafic 6, un récepteur de signalisation 7 et un émetteur de signalisation 8. Les transcodeurs 4 sont reliés aux multiplex entrants ME1 à ME4 et aux multiplex sortants MS1 à MS4. Les multiplex M1 à M8 de la figure 1 sont dédoublés, un transcodeur étant relié à un dispositif de synchronisation de chacun des sous ensembles 315 et 316. Chaque répartiteur de trafic est bien entendu relié au réseau de connexion. Cette disposition permet de substituer un sous-ensemble à un autre en cas de défaillance d'un sous-ensemble; l'interface de commande 3 de la figure 1 n'échange de message qu'avec un seul sous-ensemble; en cas de défaillance d'un sous-ensemble les messages sont échangés avec l'autre sous ensemble.

**Revendications**

1. Dispositif de raccordement de multiplex dans un central de commutation temporelle, ledit central comportant une horloge locale, des multienregistreurs, des taxeurs, des marqueurs, un organe de contrôle relié à un centre de traitement des informations, un réseau de connexion (RCX), et étant raccordé à d'autres centraux du type électromécanique ou temporel, à des satellites, par des multiplex entrants (ME1 à ME4) et des multiplex sortants (MS1 à MS4), caractérisé par le fait qu'il comprend des modules de raccordement (1), identiques, reliés chacun à des multiplex entrants et sortants, à l'horloge locale, au réseau de connexion (RCX), et aux multienregistreurs, un interface de commande (3) relié aux marqueurs, et à l'organe de contrôle, chaque module de raccordement comprenant:

— des transcodeurs (4) reliés chacun à un multiplex entrant (ME1) et à un multiplex sortant (MS1) pour effectuer un transcodage d'un premier code dans un second code et vice-versa,
— des dispositifs de synchronisation (5), un par transcodeur, reliés chacun à un transcodeur (4) pour détecter un mot de verrouillage trame et synchroniser avec l'horloge locale les voies temporelles du multiplex entrant, et injecter les mots de verrouillage trame sur les multiplex sortants,
— un répartiteur de trafic (6), pour acheminer des voies temporelles des multiplex entrants vers le réseau de connexion et un récepteur de signalisation (7), pour acheminer des voies temporelles reçues du réseau de connexion vers des multiplex sortants et y incorporer la signalisation reçue d'un émetteur de signalisation (8), ce répartiteur étant relié en entrée à chaque dispositif de synchronisation (5) par un multiplex (LE1 à LE4), en sortie à chaque dispositif de synchronisation (5) par un multiplex (LS1 à LS4), en entrée au réseau de connexion (RCX) par autant de multiplex (LE5 à LE8) qu'il y a de dispositifs de synchronisation (5), en sortie au réseau de connexion (RCX) par autant de multiplex (LS5 à LS8) qu'il y a de dispositifs de synchronisation (5) et à l'interface de commande (3),
— un récepteur de signalisation (7), pour détecter un mot de verrouillage multi-trame et recevoir la signalisation de chacun des multiplex entrants et l'émettre vers les multienregistreurs, relié au répartiteur de trafic (6), à l'interface de commande, aux multienregistreurs,
— un émetteur de signalisation (8), pour recevoir du réseau de connexion (RCX) la signalisation relative à chacun des multiplex sortants et l'émettre vers le répartiteur de trafic, relié au réseau de connexion, à l'interface de commande (3), et au répartiteur de trafic (6).

2. Dispositif de raccordement de multiplex selon la revendication 1, caractérisé par le fait que le répartiteur de trafic (6) comporte un compteur local (45), un registre d'entrée (34), une mémoire tampon (39), un registre de sortie (40) et un circuit d'adressage de la mémoire tampon, que le registre d'entrée (34) et le registre de sortie (40) sont reliés chacun à chaque dispositif de synchronisation (5) par un multiplex (LE1 à LE4, LS1 à LS4) et au réseau de connexion (RCX) par autant de multiplex (LE5 à LE8, LS5 à LS8) qu'il y a de dispositifs de synchronisation, qu la mémoire tampon (39) est reliée en entrée au registre d'entrée et à l'émetteur de signalisation (8) et en sortie au registre de sortie et au récepteur de signalisation (7), et que le circuit d'adressage est relié au compteur local (45) et à l'interface de commande (3).

3. Dispositif de raccordement de multiplex selon la revendication 1, caractérisé par le fait que le récepteur de signalisation (7) comporte un compteur local (55), un registre d'entrée (58) relié au répartiteur de trafic (6), une mémoire tampon (65) adressée par le compteur local, deux mémoires (80, 81) mémorisant chacune un demi octet et reliées en entrée à la mémoire tampon (65), un circuit d'adressage (85) des mémoires relié au compteur local (55), à l'interface de commande et à un circuit de détection de verrouillage multitrame (100), un premier et un second registre de données (101, 102) reliés chacun à une mémoire et à l'interface de commande, une mémoire d'état (106) ayant un circuit d'adressage relié à l'interface de commande et au compteur local (55), un circuit de verrouillage multitrame (100) relié en entrée à la sortie de la mémoire tampon (65) et à la sortie de la mémoire d'état (106), et relié en sortie au circuit d'adressage des mémoires, la sortie de la mémoire d'état (106) étant reliée à un registre d'état (108) lui même relié à l'interface de commande, un circuit de changement d'état (104) relié en entrée à la mémoire tampon (65) et à chacune des deux mémoires (80, 81), et un circuit de signalisation (105) relié en entrée aux deux mémoires (80, 81) et en sortie aux multienregistreurs, qu'un signal d'identification (MSM) est appliqué au circuit d'adressage (85) des mémoires (80, 81), au circuit de verrouillage multitrame (100), au circuit de changement d'état (104) et que le signal d'identification inverse (MSM) est appliqué au circuit d'adressage (85), au circuit de signalisation (105) et au circuit de détection de verrouillage multitrame (100), le signal d'identification ayant la valeur 1 lorsque le module de raccordement est relié à un central et la valeur 0 lorsqu'il est relié à un satellite.

4. Dispositif de raccordement de multiplex selon la revendication 1, caractérisé par le fait que l'émetteur de signalisation comporte:

— un compteur local (251),
— un premier registre d'entrée (232) relié au réseau de connexion (RCX),
— un second registre d'entrée (233) relié à la sortie du récepteur de signalisation (7),
— deux registres (232, 244) reliés chacun aux premier et second registres,
— deux mémoires (265, 266) mémorisant chacune un demi octet, et reliées en entrée aux deux registres et à l'interface de commande,
— un circuit d'adressage (275) des deux mémoires,
— deux registres de sortie (280, 281) reliés chacun à une mémoire et à l'interface de commande,
— un registre de signalisation (290) relié aux deux mémoires et au répartiteur de trafic (6),
— un circuit de changement d'état relié en entrée au compteur local et aux deux mémoires, et en sortie à l'interface de commande,
— un registre d'adresse (287) relié à la sortie du circuit d'adressage (275) et à l'interface de commande,

que le circuit d'adressage (275) est relié au compteur local (251) et à l'interface de commande, qu'un signal d'identification (MSM) est appliqué au circuit de changement d'état (282) et au circuit d'adressage (275), et que le signal d'identification inverse (MSM) est appliqué au circuit d'adressage, le siganl d'identification ayant la valeur 1 lorsque le module de raccordement est relié à un central et la valeur 0 lorsqu'il est relié à un satellite.

5. Dispositif de raccordement de multiplex selon la revendication 1, caractérisé par le fait qu'un module de raccordement comporte des transcodeurs (4) et deux sous ensembles (315, 316) identiques reliés chacun aux transcodeurs, au réseau de connexion et à l'interface de commande (1), chaque sous ensemble comportant:

— des dispositifs de synchronisation (5), un par transcodeur (4),
— un répartiteur de trafic (6) relié au réseau de connexion et à l'interface de commande,
— un récepteur de signalisation (7) relié au répartiteur de trafic (6), à l'interface de commande, aux multienregistreurs, et
— un émetteur de signalisation (8) relié au répartiteur de trafic (6), au réseau de connexion et à l'interface de commande.

6. Dispositif de raccordement de multiplex selon la revendication 3, caractérisé par le fait que le récepteur de signalisation comprend un circuit de détection de verrouillage de multitrame comportant: un premier registre (148) relié aux dispositifs de synchronisation et recevant un signal de saut de trame, un second registre (149) relié aux dispositifs de synchronisation et recevant un signal de doublement de trame, un calculateur (120) relié en entrée aux premier et second registres et à la mémoire d'état (106), et en sortie à un registre (122) relié en sortie à un bus (B), un premier registre unitaire (127) et un second registre unitaire (132) reliés chacun en entrée par un circuit ET/OU à la sortie de la mémoire d'état et à un décodeur (133) relié à la sortie du calculateur, la sortie des premier et second registres étant reliée au bus (B) relié à l'entrée de la mémoire d'état, un premier décodeur (138) validé par un signal d'identification (MSM), un second décodeur (137) validé par le signal d'identification inverse (MSM), les premier et second décodeurs ayant leurs sorties reliées par une porte OU (139) aux circuits ET/OU des premier et second registres unitaires.

## Patentansprüche

1. Multiplex-Verbindungsvorrichtung in einer Zeitmultiplexvermittlungsanlage, wobei die Vermittlungsanlage einen lokalen Taktgeber, Multiregistrierer, Gebührenzähler, Markierer, ein mit einer Informationsverarbeitungsanlage verbundenes Kontrollorgan und ein Verbindungsnetz (RCX) aufweist und mit anderen Vermittlungsanlagen vom elektromechanischen oder Zeitmultiplex-Typ und mit Satelliten durch Eingangs- und Ausgangsmultiplexe (ME1 bis ME4 bzw. MS1 bis MS4) verbunden ist, dadurch gekennzeichnet, daß die Vorrichtung identische Verbindungsmoduln (1) aufweist, die je mit Eingangs- und Ausgangsmultiplexen, mit dem lokalen Taktgeber, mit dem Verbindungsnetz (RCX) und den Multiregistrierern verbunden sind, ein Steuerinterface E(3), das mit den Markierern und dem Kontrollorgan verbunden ist, wobei jeder Verbindungsmodul aufweist:

— Transkodierer (4), die je mit einem Eingangs-(ME1) und einem Ausgangsmultiplex (MS1) verbunden sind, um eine Transkodierung eines ersten Kodes in einen zweiten und umgekehrt durchzuführen,

— Synchronisationsvorrichtungen (5), eine pro Transkodierer, die je mit einem Transkodierer (4) verbunden sind, um ein Rahmenverriegelungswort zu entdecken und mit dem lokalen Taktgeber die Zeitkanäle des Eingangsmultiplex zu synchronisieren und die Rahmenverriegelungsworte in die ausgehenden Multiplexe einzugeben,

— einen Verkehrsverteiler (6), um die Zeitkanäle der Eingangsmultiplexe zum Verbindungsnetz zu führen, und einen Signalisationsempfänger (7), um Empfangs-Zeitkanäle vom Verbindungsnetz zu Ausgangsmultiplexen zu bringen und diesen die von einem Signalisationssender (8) kommenden Signale einzufügen, wobei dieser Verteiler eingangsseitig mit jeder Synchronisationsvorrichtung (5) über ein Multiplex (LE1 bis LE4), ausgangsseitig mit jeder Synchronisationsvorrichtung (5) durch ein Multiplex (LS1 bis LS4), eingangsseitig mit dem Verbindungsnetz (RCX) durch soviele Multiplexe (LE5 bis LE8), wie es Synchronisationsvorrichtungen (5) gibt, ausgangsseitig mit dem Verbindungsnetz (RCX) durch soviele Multiplexe (LS5 bis LS8), wie Synchronisationsvorrichtungen (5) vorhanden sind, und mit dem Steuerinterface verbunden ist,

— einen Signalisationsempfänger (7), um ein Überrahmenverriegelungswort zu entdecken und die Signalisation von jedem der eingehenden Multiplexe zu empfangen und zu den Multiregistrierern zu schicken, wobei der Signalisationsempfänger mit dem Verkehrsverteiler (6), dem Steuerinterface, den Multiregistrierern verbunden ist,

— einen Signalisationssender (8), um vom Verbindungsnetz (RCX) die Signalisation bezüglich jedes der Ausgangsmultiplexe zu empfangen und sie um Verkehrsverteiler zu senden, wobei der Signalisationssender mit dem Verbindungsnetz, dem Steuerinterface (3) und dem Verkehrsverteiler (6) verbunden ist.

2. Multiplex-Verbindungsvorrichtung nach Anspruch 1, dadurch geennzeichnet, daß der Verkehrsverteiler (6) einen lokalen Zähler (45), ein Eingangsregister (34), einen Pufferspeicher (39), ein Ausgangsregister (40) und einen Pufferspeicher-Adressierschaltkreis aufweist, daß das Eingangsregister (34) und das Ausgangsregister (40) je mit jeder Synchronisationsvorrichtung (5) über ein Multiplex (LE1 bis LE4, LS1 bis LS4) und mit dem Verbindungsnetz über soviele Multiplexe (LE5 bis LE8, LS5 bis LS8) verbunden sind, wie Synchronisationsvorrichtungen vorhanden sind, daß der Pufferspeicher (39) eingangsseitig mit dem Eingangsregister und dem Signalisationssender (8) und ausgangsseitig mit dem Ausgangsregister und dem Signalisationsempfänger (7) verbunden ist, und daß der Adressierschaltkreis mit dem lokalen Zähler (45) und dem Steuerinterface (3) verbunden ist.

3. Multiplex-Verbindungsvorrichtung nach Anspruch 1, dadurch gekennzeichnet, daß der Signalisationsempfänger (7) einen lokalen Zähler (55), ein mit dem Verkehrsverteiler (6) verbundenes Eingangsregister (58), einen vom lokalen Zähler adressierten Pufferspeicher (65), zwei Speicher (80, 81), die je ein halbes Oktett speichern und eingangsseitig mit dem Pufferspeicher (65) verbunden sind, einen Adressierschaltkreis (85) zur Adressierung der Speicher, der mit dem lokalen Zähler (55), dem Steuerinterface und einem Überrahmenverriegelungsschaltkreis (100) verbunden ist, ein erstes und ein zweites Datenregister (101, 102), die je mit einem der Speicher und dem Steuerinterface verbunden sind, einen Zustandsspeicher (106), dessen Adressierschaltkreis mit dem Steuerinterface und dem lokalen Zähler (55) verbunden ist, einen Überrahmenverriegelungsschaltkreis (100), der eingangsseitig an den Ausgang des Pufferspeichers (65) und an den Ausgang des Zustandsspeichers (106) und ausgangsseitig an den Speicheradressierungsschaltkreis angeschlossen ist, wobei der Ausgang des Zustandsspeichers (106) an ein Zustandsregister (108) angeschlossen ist, das selbst mit dem Steuerinterface verbunden ist, einen Zustandsänderungsschaltkreis (104), der eingangsseitig mit dem Pufferspeicher (65) und jedem der beiden Speicher (80, 81) verbunden ist, und einen Signalisationsschaltkreis (105) aufweist, der eingangsseitig mit den beiden Speichern (80, 81) und ausgangsseitig mit den Multiregistrierern verbunden ist, daß ein Identifikationssignal (MSM) an den Adressierschaltkreis (85) der Speicher (80, 81), an den Überrahmenverriegelungsschaltkreis (100), an den Zustandsänderungsschaltkreis (104) angelegt ist, und daß das invertierte Identifikationssignal ($\overline{MSM}$) an den Adressierschaltkreis (85), den Signalisationsschaltkreis (105) und den Überrahmenverriegelungsschaltkreis (100) angelegt ist, wobei das Identifikationssignal den Wert EINS hat, wenn der Anschlußmodul mit einer Vermittlungsanlage verbunden ist, und den Wert NULL, wenn er mit einem Satelliten verbunden ist.

4. Multiplex-Verbindungsvorrichtung nach Anspruch 1, dadurch gekennzeichnet, daß der Signalisationssender aufweist:

— einen lokalen Zähler (251),
— ein erstes Eingangsregister (232), das mit dem Verbindungsnetz (RCX) verbunden ist,
— ein zweites Eingangsregister (233), das mit dem Ausgang des Signalisationsempfängers (7) verbunden ist,
— zwei Register (232, 244), die je mit dem ersten und zweiten Register verbunden sind,
— zwei Speicher (265, 266), die je ein halbes Oktett speichern und eingangsseitig mit den zwei Registern und dem Steuerinterface verbunden sind,
— einen Adressierschaltkreis (275) für die beiden Speicher,
— zwei Ausgangsregister (280, 281), die je mit einem Speicher und dem Steuerinterface verbunden sind,
— ein Signalisationsregister (290), das mit den zwei Speichern und dem Verkehrsverteiler (6) verbunden ist,
— einen Zustandsänderungsschaltkreis, der eingangsseitig mit dem lokalen Zähler und den beiden Speichern, und ausgangsseitig mit dem Steuerinterface verbunden ist,
— ein Adressenregister (287), das an den Ausgang des Adressierschaltkreises (275) und das Steuerinterface angeschlossen ist, daß der Adressierschaltkreis (275) mit dem lokalen Zähler (251) und dem Steuerinterface verbunden ist,

daß ein Identifikationssignal (MSM) an den Zustandsänderungsschaltkreis (282) und den Adressierschaltkreis (275) angelegt wird, und daß das invertierte Identifikationssignal (MSM) an den Adressierschaltkreis angelegt wird, wobei das Identifikationssignal den Wert EINS hat, wenn der Anschlußmodul mit einer Vermittlungsanlage verbunden ist, und den Wert NULL, wenn er mit einem Satelliten verbunden ist.

5. Multiplex-Verbindungsvorrichtung nach Anspruch 1, dadurch gekennzeichnet, daß ein Verbindungsmodul Transkodierer (4) und zwei identische Untereinheiten (315, 316) aufweist, die jede mit den Transkodierern, dem Verbindungsnetz und dem Steuerinterface (1) verbunden sind, wobei jede Untereinheit aufweist:

— Synchronisationsvorrichtungen (5), eine pro Transkodierer (4),
— einen Verkehrsverteiler (6), der mit dem Verbindungsnetz und dem Steuerinterface verbunden ist,
— einen Signalisationsempfänger (7), der mit dem Verkehrsverteiler (6), dem Steuerinterface, den Multiregistrierern verbunden ist, und
— einen Signalisationssender (8), der mit dem Verkehrsverteiler (6), dem Verbindungsnetz und dem Steuerinterface verbunden ist.

6. Multiplex-Verbindungsvorrichtung nach Anspruch 3, dadurch gekennzeichnet, daß der Signalisationsempfänger einen Überrahmenverriegelungsschaltkreis aufweist, der enthält: ein erstes Register (148), das mit den Synchronisationsvorrichtungen verbunden ist und ein Rahmensprungsignal empfängt, ein zweites Register (149), das mit den Synchronisationsvorrichtungen verbunden ist und ein Rahmenverdoppelungssignal empfängt, einen Rechner (120), der eingangsseitig mit den ersten und zweiten Registern und dem Zustandsspeicher (106) und ausgangsseitig mit einem Register (122) verbunden ist, das mit seinem Ausgang an einen Bus (B) angeschlossen ist, ein erstes (127) und ein zweites Einheitsregister (132), die je eingangsseitig über einen UND/ODER-Schaltkreis mit dem Ausgang des Zustandsspeichers und mit einem an den Ausgang des Rechners angeschlossenen Dekodierer (133) verbunden sind, wobei der Ausgang des ersten und des zweiten Registers mit dem Bus (B) verbunden ist, der an den Eingang des Zustandsspeichers angeschlossen ist, einen ersten durch ein Identifikationssignal (MSM) aktivierten Dekodierer (138), einen zweiten durch das invertierte Identifikationssignal (MSM) aktivierten Dekodierer (137), wobei die Ausgänge des ersten und des zweiten Dekodierers durch ein ODER-Tor (139) an die UND/ODER-Schaltkreise des ersten und zweiten Einheitsregisters angeschlossen sind.

**Claims**

1. A multiplex connection device in a time-division exchange, said exchange having a local clock, multiregisters, charging units, markers, a control unit connected to an information processing center, a connection network (RCX), and being connected to other electromechanical or time-division exchanges, to satellites, by incoming (ME1 to ME4) and outgoing multiplex lines (MS1 to MS4), characterized in that it comprises identical connection modules (1) which are each connected to incoming and outgoing multiplex lines, to the local clock, to the connection network (RCX), and to the multiregisters, a control interface (3) connected to the markers, and to the control unit, each connection module comprising:

— transcoders (4) each connected to an incoming multiplex line (ME1) and to an outgoing multiplex line (MS1) to convert a first code to a second code and vice versa,
— synchronisation devices (5), one for each transcoder, each connected to a transcoder (4) to detect a frame alignment word and to synchronize with the local clock the time slots of the incoming multiplex line and to inject the frame alignment word into the outgoing multiplex lines,
— a traffic distributor (6), for transferring the time slots of the incoming multiplex lines to the switching network and to a signalisation receiver (7), for transferring the time slots received from the switching network to outgoing multiplex lines while adding thereto the signalisation signals received from a signalisation sender (8), this distributor being connected at its input to each synchronisation device (5) by a multiplex line (LE1 to LE4), at the output to each synchronisation device (5) by a multiplex line (LS1 to LS4), at the input to the switching network (RCX) by as many multiplex lines (LE5 to LE8) as there are synchronisation devices (5), at the output to the switching network (RCX) by as many multiplex lines (LS5 to LS8) as there are synchronisation devices (5) and to the control interface (3),

— a signalisation receiver (7) for detecting a multiframe alignment word and for receiving the signalisation of each of the incoming multiplex lines and for sending it towards the multiregisters, this receiver being connected to the traffic distributor (6), to the control interface, to the multiregisters,

— a signalisation sender (8) for receiving from the switching network (RCX) the signalisation relative to each of the outgoing multiplex lines and to send it towards the traffic distributor, this sender being connected to the switching network, to the control interface (3) and to the traffic distributor (6).

2. A multiplex connection device according to claim 1, characterized in that the traffic distributor (6) comprises a local counter (45), an input register (34), a buffer memory (39), an output register (40) and a buffer memory addressing circuit, the input register (34) and the output register (40) each being connected to each synchronisation device (5) by a multiplex line (LE1 to LE4, LS1 to LS4) and to the switching network (RCX) by as many multiplex lines (LE5 to LE8, LS5 to LS8) as there are synchronisation devices, the buffer memory (39) having its input connected to the input register and to the signalisation sender (8) and having its output connected to the output register and to the signalisation receiver (7), the addressing circuit being connected to the local counter (45) and to the control interface (3).

3. A multiplex connection device according to claim 1, characterized in that the signalisation receiver (7) comprises a local counter (55), an input register (58) connected to the traffic distributor (6), a buffer memory (65) addressed by the local counter, two memories (80, 81) each storing one half-byte and with their inputs connected to the buffer memory (65), an addressing circuit (85) for addressing the memories connected to the local counter (55), the control interface and to a multi-frame alignment detection circuit (100), first and second data registers (101, 102) each connected to a memory and to the control interface, a status memory (106) having an addressing circuit connected to the control interface and to the local counter (55), a multiframe alignment circuit (100) with its input connected to the output of the buffer memory (65) and to the output of the status memory (106) and with its output connected to the memory addressing circuit, the output of the status memory (106) being connected to a status register (108) which is itself connected to the control interface, a change of state circuit (104) with its input connected to the buffer memory (65) and to each of the two memories (80, 81), and a signalisation circuit (105) with its input connected to the two memories (80, 81) and its output connected to the multiregisters, that an identification signal (MSM) is input to the addressing circuit (85) of the memories (80, 81), to the multiframe alignment circuit (100) and to the change of state circuit (104), the inverted identification signal ($\overline{\text{MSM}}$) being input to the addressing circuit (85), to the signalisation circuit (105) and to the multiframe alignment detection circuit (100), the identification signal having the value 1 when the connection module is connected to an exchange, and the value 0 when it is connected to a satellite.

4. A multiplex connection device according to claim 1, characterized in that the signalisation sender comprises:

— a local counter (251),
— a first input register (232) connected to the switching network (RCX),
— a second input register (233) connected to the output of the signalisation receiver (7),
— two registers (232, 244) each connected to the first and second registers,
— two memories (265, 266) each storing one half-byte, with their inputs connected to the two registers and to the control interface,
— a circuit (275) for addressing the two memories,
— two output registers (280, 281) each connected to a memory and to the control interface,
— a signalisation register (290) connected to the two memories and to the traffic distributor (6),
— a change of state circuit with its input connected to the local counter and to the two memories and its output connected to the control interface,
— an address register (287) connected to the output of the addressing circuit (275) and to the control interface, that the addressing circuit (275) is connected to the local counter (251) and to the control interface,

that an identification signal (MSM) is input to the change of state circuit (282) and to the addressing circuit (275), and that the inverted identification signal ($\overline{\text{MSM}}$) is input to the addressing circuit, the identification signal having the value 1 when the connection module is connected to an exchange, and the value 0 when it is connected to a satellite.

5. A multiplex connection device according to claim 1, characterized in that a connection module comprises transcoders (4) and two identical subsystems (315, 316) each connected to the transcoders, to the switching network and to the control interface (1), each subsystem comprising:

— one synchronisation device (5) for each transcoder (4),

— a traffic distributor (6) connected to the switching network and to the control interface,

— a signalisation receiver (7) connected to the traffic distributor (6), to the control interface and to the multiregisters, and

— a signalisation sender (8) connected to the traffic distributor (6), to the switching network and to the control interface.

6. A multiplex connection device according to claim 3, characterized in that the signalisation receiver comprises a multiframe alignment detection circuit comprising a first register (148) connected to the synchronisation devices and receiving a frame skip signal, a second register (149) connected to the synchronisation devices and receiving a frame repetition signal, a processor (120) with its input connected to the first and second registers and to the status memory (106) and its output connected to a register (122), the output of this register being connected to a bus (B), a first unitary register (127) and a second unitary register (132), each with its input connected by AND/OR gates to the output of the status memory and to a decoder (133) connected to the processor output, the outputs of the first and second registers being connected to the bus (B), the bus (B) being connected to the input of the status memory, a first decoder (138) enabled by an identification signal (MSM), a second decoder (137) enabled by the inverted identification signal ($\overline{\text{MSM}}$), the outputs of the first and second decoder being connected by an OR gate (139) to the AND/OR circuits of the first and second unitary registers.

# FIG. 1

# FIG. 2

# FIG. 3

# FIG. 4

0018615

FIG. 5

FIG. 6

FIG.7

0018615

FIG. 8

0018615

FIG. 9

FIG. 10

8

FIG. 11

0018615